Europäisches Patentamt

European Patent Office

Office européen des brevets

(11) Publication number: **0 143 392**
**B1**

(12) **EUROPEAN PATENT SPECIFICATION**

(45) Date of publication of patent specification: **01.03.89**

(51) Int. Cl.⁴: **C 02 F 11/14, C 02 F 11/18**

(21) Application number: **84113712.8**

(22) Date of filing: **14.11.84**

(54) **Biological sludge hygienisation process.**

(30) Priority: **21.11.83 IT 2380583**

(43) Date of publication of application:
**05.06.85 Bulletin 85/23**

(45) Publication of the grant of the patent:
**01.03.89 Bulletin 89/09**

(84) Designated Contracting States:
**AT BE CH DE FR GB LI LU NL SE**

(56) References cited:
**DE-A-1 484 826**
**DE-A-1 806 732**
**DE-B-2 146 388**
**US-A-4 038 181**

(73) Proprietor: **ECODECO S.p.A.**
**Cassinazza di Baselica**
**I-27010 Giussago (Pavia) (IT)**

(72) Inventor: **Natta, Giuseppe**
**La Favorita**
**I-20079 Sant'Angelo Lodigiano Milano (IT)**

(74) Representative: **Benedusi, Delfo**
**INTERNAZIONALE BREVETTI INGG. ZINI,**
**MARANESI & C. S.r.l.**
**P.zza Castello 1**
**I-20121 Milano (IT)**

Courier Press, Leamington Spa, England.

## Description

This invention relates to a process for the hygienisation of biological sludge.

In particular, the present invention is concerned with a process for hygienising biological conditioned sludges issuing from the treatment of sewage to make it suitable for disposal at controlled dumps, in conformity with existing regulations.

According to an interesting aspect of the invention, the process yields hygienised slurries or suspensions which may be used in agriculture as fertilizers, by beneficiating their content in fertilising elements.

Thus, the invention falls within the frame of recently developed technologies related to the environmental problems involved by the need to dispose of large amounts of organic sludge or sewage of either human or animal origin and having a high, actual or potential, content of biological polluting matter, mainly of fecal derivation.

Conversion of such sludge or sewage of substantially organic and fecal nature, whether of human or animal origin, into hygienised materials having the consistency of pumpable slurries or suspensions, according to the invention, represents a useful alternative to the hygienisation and/or disposal methods hitherto adopted and presently no longer compatible with the strict regulations currently enforced on enviromental protection.

Depuration of such organic sludge involves, as products issuing from removal of the contaminating phase, obtainment of a slurry having a varying concentration dry content, essentially in a suspension state. Said content comprises, in addition to contaminating matter of chemical nature, a large amount of all the forms of enteric microorganisms of fecal derivation or "bacterial charge", especially of the saprophytic type, as well as minor amounts of pathogenic or potentially pathogenic organisms which, for example, in some particular local conditions of concentrated population and activities (such as hospitals, etc), may attain very high totals and pose special problems.

The problem of how to make depuration sludges hygienically harmless has been the object of several proposals and approaches, described in the literature.

Known are destructive (incinerating) methods of sludge treatment, which besides being unrelated to the method of this invention, have the disadvantage of a high cost in term of energy requirements which is not always acceptable.

Direct disposal over the ground, either in the liquid or dehydrated states, of the sludges at urban dumps involves proper operation of the latter to avoid endangering the water bed, with attendant problems of finding suitable areas, etc. On the other hand, there are areas where disposal is provided over agricultural soil, with the risk of contact with animals, humans (salmonellosis) and vegetables for human consumption, in spite of its being carried out by spreading such dehydrated sludges over the ground prior to the vegetative phase of cultivations and not on growing plants. However, there exist highly restrictive regulatory bodies on this disposal method.

Such methods are highly objectionable in the light of statistical conclusions on the increased incidence of salmonellosis attributable to the utilisation of biological sludges in agriculture.

On the other hand, it is scientifically ascertained that the infective danger of the pathogenic microorganisms, which only make up a small portion of the microbial flora present therein, is more than proportional to their number; in other words, it is known that for the appearance of the disease a "minimum infecting dose" is required, thereby a few scattered organisms would make the pathological situation unlikely to occur. And the more so because, once removed from their intestinal environment, pathogenic bacteria and viruses especially are substantially unable to reproduce themselves outside of the host organism. The differing environmental conditions (pH, temperature, solar radiation, humidity, predation, etc.) contribute to their becoming rarefied and disappearing over a more or less long time period.

US—A—4 038 181 describes a dewatering process of previously untreated sludges. The sludge is mixed with urea, or ammonium or potassium hygroscopic salts (sulfates, phosphates) thereby producing a phase separation comprising a liquid phase of the hygroscopic salt dissolved in water, removed from the sludge, and a solid or semi-solid phase of the sludge solids with any remaining water. The phase are then separated for subsequent simpler handling, disposal or further processing. No hygienisation problem is put and/or solved by such process, merely directed to extract water from sludges by separating solid matter for an easier handling thereof.

DE—A—1 484 826 describes a separation process to facilitate the separation of aqueous colloidal substances, present in sludges, by a thin layer heating process, carried out for short times in the optional presence of precipitating and/or flocculating agents, metal salts ($FeCl_3$, $AlCl_3$, $CaCo_3$, Thomas slags). Also in this case there is dealt essentially with a dehydration problem, solved by thermal means.

It would, therefore, be acceptable from a practical standpoint that a process should lead, if not to complete elimination, to a drastic reduction of the microorganism content in conditions of substantial static multiplicative equilibrium (stabilisation), like the one forming the subject matter of this invention.

The objective of reducing and, if possible, eliminating all forms of pathogenic microorganisms has underlaid several processes of treatment proper of depuration sludges. Such processes are based on the following arrangements.

Anaerobic mesophilic digestion at 33°C: this showed to be inadequately effective, as did cold aerobic digestion, especially to fill the current strict regulatory body requisites.

Autothermal thermophilic aerobic digestion: this employs the exothermy of the biological reaction to raise temperature up to 80°C, through the use of pure oxygen, and appears to provide satisfactory results, but at the expense of high operating and investment costs.

Pasteurisation: the process takes place at about 70°C over a suitable time period, and in general, the sludge is digested, prior to or especially after pasteurisation; however, there still exist problems of re-contamination. This treatment is then followed, with some processes, by an additional treatment consisting of additivating quicklime into the pasteuriser; this additivation, however, has yielded no results of interest per se.

Thermal drying: at 100°C down to a 15% water content; is prohibitive in terms of energy costs.

Accordingly, there exists in the current state of the art a serious deficiency as regards the factual possibility of solving, in an effective manner not liable to reappearance, the problem of hygienising biological sludges of significant environmental involvement, while affording consistent results with modern requirements.

It is, therefore, an object of this invention to provide a process for the stabilised hygienisation of biological sludge from sewage depuration processes or other sources, whether of human or animal nature, in general of slurry-like suspensions having a high biological polluting content of fecal origin, which process is free of the drawbacks exhibited by the cited prior processes.

A further object of this invention is to provide an improved process for the stabilised hygienisation of such biological sludges, which is simple and economical, has decreased energy consumption, and reduced operational or plant set up requirements.

It is another object of the invention to arrange, as mentioned, in a preferred, effective and economical embodiment thereof, for this process to yield liquors which can be used as fertilisers having a beneficiated content of fertilising elements.

These and other objects, such as will be apparent to the skilled one from the description which follows, are achieved, according to this invention, by a process for the stabilised hygienisation of biological sludges, characterized in that said sludge is mixed with at least one salt of ammonium, alkaline and alkaline-earth metals selected from sulphates, phosphates, chlorides, nitrates, acetates of ammonium, sodium, potassium, calcium, magnesium, in an overall amount comprised between 20% and 90% by weight with respect to the sludge as such, at a pH range comprised between 2 and 10, preferably comprised between 2 and 6 and at a temperature comprised between 40°C and 80°C, and passing the resulting hygienised mass to storage for dumping of its use.

In other terms, it has been unexpectedly found that the addition of at least one salt of a cation of an alkaline and/or alkaline-earth metal or ammonium, e.g. until a pumpable liquid consistency is attained, with possible topping with a required amount of $H_2O$, yields a drastic and lasting decrease in the microbiological content or "bacterial charge" of the sludge, making it de facto hygienised and suitable for dumping and optionally, depending on the salts used, reclaimable for agricultural applications. The hygienising effect is retained stably even after the sludge has been fully or partly dried.

By way of example, "Downing Indices" are obtained which empirically refer to the ratio of the bacterial content, such as fecal streptococci, of the sludge as such to that of the final hygienised slurry, on the order of 2300, or as similarly computed for fecal coliforms, on the order of 1100, with negative salmonellae on analysis.

Usable as mentioned are salts of cations of alkaline or alkaline-earth metals or ammonium, either alone or mixed together. Ammonium salts are preferred. The anionic portion bears no critical influence on the process effectiveness; compatible are anions of inorganic or organic acids, such as hydrochloric, sulphuric, phosphoric, nitric acid etc. among the inorganic, and acetic acid, etc. among the organic.

The use of the following salts has shown to be effective: ammonium sulphate, phosphates, chloride and nitrate; potassium, sodium, magnesium, calcium sulphates, chlorides and phosphates; sodium and potassium nitrates; and their respective acetates or mixtures thereof. Ammonium sulphate and monobasic phosphate are preferred.

Through an appropriate selection of the salts, as balanced according to the desired final fertilising product, a product may be obtained, as solid or liquid final hygienised slurry, which is beneficiated with N,P,K,Ca-based fertilising elements ready for use in agricultural applications.

The salts may be used in their solid crystalline state, possibly as associated with water, or preferably, in a generally concentrated or substantially saturated solution. Also usable are non-pure salts or salt mixtures, reclaimed as process byproducts. As an example, it would be possible to use the ammonium sulphate byproduct of the caprolactam process, etc. From this point of view, this invention affords the faculty of implementing it by a process employing essentially waste materials, to result in self-reclaim of the final hygienised slurry; thus, positive aspects of economical recovery are achieved in a technological field which normally represents an economical burden for communities.

The amount of salt or salt mixture added may vary over a wide range, which would be practically defined by the desired degree of hygienisation or "Downing Index" according to the microbical biological content or "bacterial charge" determined for the sludge to be treated.

Thus, viable may be, within the scope of the invention, "saltings" or additions of salt or salt mixtures ranging in actual practice from 20% to 90% by weight with respect to the sludge as such to be hygienised.

Of course, depending on the composition (liquid/solid) of the sludge to be treated, on its biological content to be downed, and type and amount of the salts envisaged, it may prove necessary, e.g. in the instance of solid salts being used, to restore the consistency of the treated slurry back to pumpability through the addition of water.

Usable in practice is water in amounts yielding a dry solid content in the pumpable slurry ranging from about 0.1% to 20% by weight.

Thus, there exist wide quantitative and qualitative limits to the scope of this invention, within which the type of salt or salt mixture to be used and related amounts and ratii may be selected to suit the nature of the sludge to be treated and provide the results sought.

The process is carried out in the presence of a pH value approximately included between 2 and 10, which value, when not to be found in the starting sludge, can be adjusted within the above range in an easy manner by the additivation of acidic or basic, usually mineral, conditioners such as HCl, $H_2SO_4$, or NaOH, $Ca(OH)_2$, etc. The process is preferably conducted with an acidic to slightly acidic pH in the approximate range of 2 to 6.

Finally, the operating temperature ranges as a rule depending on the nature of the sludge, the operative times or accelerated maturing time, etc., between 40°C and 80°C for best and/or faster results.

Likewise, the process of this invention is more or less protracted in time according to the various parameters involved, such as the nature of the sludge, quality and quantity of the salt(s), temperature, etc. Time periods in the approximate range of 3 to 12 hours are usually workable.

Specially advantageous results are to be obtained with the use of saturated aqueous solutions of ammonium sulphate and/or monobasic phosphate in amounts ranging from 40% to 50% by weight with respect to the sludge as such, and at a pH in the approximate range of 2 to 6.

From the standpoint of workability, the process of this invention can be carried out with simple conventional procedures and equipment.

In essence, it is a matter of adding, while stirring, the salt(s) to the sludge as such, in preset amounts and ratii, in a waterproofed tank which may be heated in a conventional fashion, until the mass becomes fully homogenised, over a required time period, under microbiogical control. The resulting hygienised mass is then passed to storage for dumping or its use.

The process of this invention is specially advantageous on account of the simple and inexpensive materials and equipment that it requires and of its mild process conditions.

Specifically, it enables high "Downing Indices" to be achieved in the hygienised slurries, which meet the requirements of strict regulatory bodies. Such hygienisation also fills requisites of stability over time with an attenuated or no risk of re-contamination.

Furthermore, through an appropriate selection and dosage of salts in a calibrated mixture, it becomes possible to produce a pumpable slurry which may be dehydrated and is hygienised and beneficiated with fertilising elements, thereby it may be readily utilised in agriculture to advantageously revaluate biological sludge from the economical standpoint.

Finally, and as pointed out in the foregoing, impurity-containing salts or salt solutions may be used such as frequently form reclaim and/or waste materials from a variety of industrial processes, thereby their use imparts the process of this invention with an aspect of self-reclaim and/or economical revaluation of waste materials which is quite attractive.

The invention will be now described more specifically in the examples given herein below for illustrative purposes.

Examples 1 to 20

The tests have been carried out in the Examples in the same operating conditions throughout, by merely changing parameters within the indicated ranges.

The operating conditions were as follows:

1 kg biological sludge as such, with 10% solid residue, has been additivated with predetermined amounts of salt in the form of a saturated aqueous solution. The mixture has been maintained under agitation mechanically in a waterproofed tray equipped with electric heaters, at the temperature and pH sought.

Homogenisation lasted for about 6 hours.

Then, the bacterial charge of the hygienised slurry yielded has been ascertained and compared to that found in a sample of the untreated biological sludge as such.

The parameters and results are as shown in Tables 1 to 5 herein below. The characters A, B, C, D, E denote the origins of the sludge to be treated, namely:

A = from urban depurator or conditioner;
B = from depuration of dyeing plant waste;
C = from depuration of pharmaceutical plant waste;
D = from depuration of food processing (dairy) plant waste;
E = mixture of sludges of the A and B types.

Under the entries "Fecal streptococci" and "Colimetry", the figures under "I" denote the respective "Downing Indices", "I" being short for "Downing Index".

4

In Table 1
Bacterial charge of biological sludge A, as such:

| | |
|---|---|
| Fecal streptococci | 70,000/g |
| Colimetry | 4,600/g |
| Salmonellae | positive |

In Table 2
Bacterial charge of biological sludge B, as such:

| | |
|---|---|
| Fecal streptococci | 100,000/g |
| Colimetry | 230,000/g |
| Salmonellae | negative |

In Table 3
Bacterial charge of biological sludge C, as such:

| | |
|---|---|
| Fecal streptococci | 180,000,000/g |
| Colimetry | 230,000/g |
| Salmonellae | negative |

In Table 4
Bacterial charge of biological sludge D, as such:

| | |
|---|---|
| Fecal streptococci | 10,000/g |
| Colimetry | 4,600/g |
| Salmonellae | negative |

In Table 5
Bacterial charge of biological sludge E, as such:

| | |
|---|---|
| Fecal streptococci | 70,000,000/g |
| Colimetry | 22,000/g |
| Salmonellae | positive |

TABLE 1

| Example | °C | pH | Salt | % Sat. Sol. sludge a.s. by weight | F. streptococci | | Colimetry | | Salmon-ellae |
|---|---|---|---|---|---|---|---|---|---|
| | | | | | per g | I | per g | I | |
| 1 | ambient | 6 | Ammonium sulphate | 50 | <30 | >2333 | 4 | 1150 | Negative |
| 2 | 80 | 2.5—3 | do. | 50 | <30 | >2333 | 5 | 920 | do. |
| 3 | 80 | 2.5—3 | do. | 40 | 130 | 538 | 5 | 920 | do. |
| 4 | 80 | 2.5—3 | do. | 30 | 20,000 | 3.5 | 120 | 38 | do. |

TABLE 2

| Example | °C | pH | Salt | % Sat. Sol. sludge a.s. by weight | F. streptococci | | Colimetry | | Salmon-ellae |
|---|---|---|---|---|---|---|---|---|---|
| | | | | | per g | I | per g | I | |
| 5 | ambient | 6 | Ammonium sulphate | 50 | 32,000 | 3 | 4600 | 50 | Negative |
| 6 | 80 | 2.5—3 | do. | 50 | 15,000 | 7 | 1800 | 128 | do. |
| 7 | 80 | 2.5—3 | do. | 40 | 22,000 | 4.5 | 2000 | 115 | do. |
| 8 | 80 | 2.5—3 | do. | 30 | 25,000 | 4 | 2200 | 104 | do. |

EP 0 143 392 B1

TABLE 3

| Example | °C | pH | Salt | % Sat. Sol. sludge a.s. by weight | F. streptococci per g | F. streptococci l | Colimetry per g | Colimetry l | Salmon-ellae |
|---|---|---|---|---|---|---|---|---|---|
| 9 | ambient | 6 | Ammonium sulphate | 50 | 720,000 | 250 | 4600 | 50 | Negative |
| 10 | 80 | 2.5—3 | do. | 50 | 250,000 | 720 | 1000 | 230 | do. |
| 11 | 80 | 2.5—3 | do. | 40 | 420,000 | 429 | 2500 | 92 | do. |
| 12 | 80 | 2.5—3 | do. | 30 | 450,000 | 400 | 2700 | 85 | do. |

TABLE 4

| Example | °C | pH | Salt | % Sat. Sol. sludge a.s. by weight | F. streptococci per g | F. streptococci l | Colimetry per g | Colimetry l | Salmon-ellae |
|---|---|---|---|---|---|---|---|---|---|
| 13 | ambient | 6 | Ammonium sulphate | 50 | <30 | >333 | 15 | 306 | Negative |
| 14 | 80 | 2.5—3 | do. | 50 | <30 | >333 | 10 | 460 | do. |
| 15 | " | 2.5—3 | do. | 40 | <30 | >333 | 20 | 230 | do. |
| 16 | " | 2.5—3 | do. | 30 | 150 | 67 | 55 | 84 | do. |

EP 0 143 392 B1

TABLE 5

| Example | °C | pH | Salt | % Sat. Sol. sludge a.s. by weight | F. streptococci | | Colimetry | | Salmon-ellae |
|---|---|---|---|---|---|---|---|---|---|
| | | | | | per g | I | per g | I | |
| 17 | ambient | Not de. | Ammonium sulphate | 50 | 830,000 | 84 | 210 | 105 | Negative |
| 18 | do. | Not de. | Monobasic ammonium phosphate | 30 | 40,000 | 1750 | 2000 | 11 | do. |
| 19 | do. | Not de. | do. | 50 | 50,000 | 1400 | 420 | 52 | do. |
| 20 | do. | Not de. | Potassium chloride | 50 | 1,550,000 | 45 | 110 | 200 | do. |

EP 0 143 392 B1

# EP 0 143 392 B1

## Claims

1. A process for the stabilized hygienisation of biological sludges, characterized in that said sludge is mixed with at least one salt of ammonium, alkaline and alkaline-earth metals selected from sulphates, phosphates, chlorides, nitrates, acetates of ammonium, sodium, potassium, calcium, magnesium, in an overall amount comprised between 20% and 90% by weight with respect to the sludge as such, at a pH range comprised between 2 and 10 and at a temperature comprised between 40°C and 80°C, and passing the resulting hygienised mass to storage for dumping or its use.

2. A process, according to claim 1, characterized in that the pH value is comprised between 2 and 6 about, by the optional addition of basicity/acidity conditioning agents.

3. A process, according to claim 1, characterized in that the biological sludge is mixed with a balanced mixture of N, P, Ca fertilising element salts.

4. A process, according to claim 1, characterized in that said salt or salts are additioned in the form of a substantially saturated solution.

## Patentansprüche

1. Verfahren zur stabilisierten Hygienisierung von biologischen Schlämmen, dadurch gekennzeichnet, daß der Schlamm mit wenigstens einem Ammonium-, Alkali- und Erdalkalimetallsalz, ausgewählt aus Sulfaten, Phosphaten, Chloriden, Nitraten, Acetaten des Ammoniums, Natriums, Kaliums, Kalziums und Magnesiums, in einer Gesamtmenge zwischen 20 und 90 Gew.-%, bezogen auf den Schlamm als solchen, bei einem pH-Wert im Bereich von 2 bis 10 und einer Temperatur zwischen 40 und 80°C vermischt und die resultierende hygienisierte Masse der Lagerung auf der Halde oder seiner Verwendung zugeführt wird.

2. Verfahren nach Anspruch 1, dadurch gekennzeichnet, daß der pH-Wert zwischen 2 und 6 durch wahlweisen Zusatz von Basizität/Azidität-Konditionierungsmitteln gehalten wird.

3. Verfahren nach Anspruch 1, dadurch gekennzeichnet, daß der biologische Schlamm mit einem ausgewogenen Gemisch von Düngesalzen der Elemente N, P und Ca vermischt wird.

4. Verfahren nach Anspruch 1, dadurch gekennzeichnet, daß das Salz oder die Salze in Form einer im wesentlichen gesättigten Lösung zugesetzt werden.

## Revendications

1. Procédé pour la désinfection stabilisée de boues biologiques, caractérisé en ce que ladite boue est mélangée avec au moins un sel d'ammonium, un sel alcalin et des métaux alcalino-terreux choisis parmi les sulfates, les phosphates, les chlorures, les nitralés et les acétates d'ammonium, de sodium, de potassium, de calcium et de magnésium, dans une quantité totale comprise entre 20 et 30% en poids par rapport à la boue proprement dite, à un pH compris entre 2 et 10 et à une température comprise entre 40°C et 80°C, et en ce que la masse aseptisée obtenue est transférée à un réservoir en vue de son stockage ou de son utilisation.

2. Procédé suivant la revendication 1, caractérisé en ce que le pH est compris entre environ 2 et 6 par addition éventuelle d'agents de conditionnement en basicité ou acidité.

3. Procédé suivant la revendication 1, caractérisé en ce que la boue biologique est mélangée avec un mélange équilibré de sels élémentaires fertilisants de N, P ou Ca.

4. Procédé suivant la revendication 1, caractérisé en ce que le ou les sels précités sont précités sont additionnés sous la forme d'une solution substantiellement saturée.